# DEMANDE DE BREVET EUROPEEN

(11) **EP 0 830 913 A1**
(43) Date de publication de la demande: **25.03.1998**
(21) Numéro de dépôt: 97440076.4
(22) Date de dépôt: 08.09.1997
(51) Int. Cl.: B23K 1/002

(54) **Procédé de brasage par induction d'un outil de coupe, tel qu'une plaquette en carbure ou analogue, sur un support en acier**

(30) Priorité: 19.09.1996 FR 9611580
(71) Demandeur: Haute Frequence Brasage de la Doller, Société Anonyme, 68520 Burnhaupt-le-Haut (FR)
(72) Inventeur: Weigel, Marc, 68620 Bitschwiller-les-Thann (FR)
(74) Mandataire: Rhein, Alain

(57) **Abrégé**

L'invention a trait à un procédé de brasage par induction d'un outil de coupe (2) , tel qu'une plaquette en carbure ou analogue, sur un support en acier (1) d'un dispositif de travail de la terre ou autre matière abrasive, tel un soc de charrue (3).

Ce procédé est caractérisé en ce que :
- l'on élève l'ensemble, support en acier (1) et outil de coupe (2) , à une température correspondant sensiblement à la température d'austénitisation (TA) de la nuance de l'acier du support (1), tandis qu'entre ce dernier et l'outil de coupe (2) est interposé un métal d'apport dont la température de fusion (Tf) se situe dans une plage comprise entre ladite température d'austénitisation (TA) et une température au plus inférieure de 30 % ;
- puis après une période de refroidissement permettant au métal d'apport de passer de l'état liquide au moins à l'état plastique, l'on procède à la trempe de l'ensemble sous fluide gazeux et/ou liquide.

## Description

L'invention a trait à un procédé de brasage par induction d'un outil de coupe, tel qu'une plaquette en carbure ou analogue, sur un support en acier d'un dispositif de travail de la terre, de la pierre ou autre matière abrasive similaire, tel un soc de charrue, une dent de herse rotative, de haveuse ou d'un tambour de broyeur.

La présente invention trouvera son application dans des machines agricoles, des engins de travaux publics et, de manière générale, dans le domaine des dispositifs destinés à travailler le sol, la pierre ou toute autre matière abrasive.

De tout temps l'on a cherché à renforcer les outils destinés à travailler le sol de manière à augmenter leur tenue mécanique aux agents abrasifs dans lesquels ils évoluent. Dans ce contexte, les outillages en acier subissent, usuellement, des traitements thermiques, plus particulièrement une opération de trempe, permettant, en définitive, d'en augmenter la dureté, donc leur tenue à l'abrasion.

Parallèlement on été développés des outillages de coupe, tout particulièrement des plaquettes au carbure, dont l'emploi est répandu dans de multiples domaines en raison, précisément, des caractéristiques mécaniques fantastiques dont elles sont dotées. Ainsi, ces plaquettes en carbure sont réputées pour leur dureté, donc leur longévité, dans le cadre de leur utilisation pour l'usinage de métaux ou tout autre matériau.

Dans ce contexte, l'on a imaginé de rapporter, également, de telles plaquettes en carbure sur les parties actives les plus exposées de dispositifs de travail de la terre, de la pierre ou analogue. Ainsi, par exemple, il est connu de rapporter sur le bord d'attaque d'une dent d'un soc de charrue un tel outil de coupe à haute résistance sous forme d'une plaquette en carbure. L'assemblage est obtenu par brasage. Or, le corps de la dent, en acier, ayant subi préalablement un traitement thermique sous forme d'une trempe, la partie avant de cette dent sur laquelle est appliquée, en fin de compte, la plaquette en carbure est soumise, en raison de l'élévation en température résultant du brasage, à un revenu. Aussi, cette partie avant de la dent est altérée du point de vue de sa résistance à l'abrasion, il s'ensuit qu'à l'arrière même de ladite plaquette en carbure le corps de la dent s'use rapidement. En conséquence, le gain de longévité qui devait résulter de l'application de la plaquette en carbure, est on ne peut plus relatif.

La solution consistant à utiliser des aciers spécifiques tels que des aciers rapides, si elle répond au problème initial, est trop coûteuse et ne peut être envisagée, raisonnablement. Ainsi, le coût d'une dent de soc de charrue en acier rapide serait exorbitant et il convient de rappeler, à ce propos, que les charrues que l'on vient atteler aux véhicules tracteurs actuels sont équipées, usuellement, d'une pluralité de socs et, donc, de plusieurs dents.

Par ailleurs, remplacer le brasage par du collage n'est pas envisageable, la résistance mécanique et chimique des colles connues étant largement inférieure à celle d'un brasage et insuffisante ici.

En outre, l'on ne peut envisager de rapporter de telles plaquettes en carbure, par des moyens mécaniques du type rivetage ou vissage, sur l'extrémité d'une dent. De tels moyens de fixation seraient les premiers à céder sous l'action des agents abrasifs sans compter que cette solution entraîne, forcément, une fragilisation, par endroit, de la plaquette en carbure et un coût de fabrication accru.

La présente invention se propose de répondre au problème posé au travers d'un procédé de brasage consistant, en fin de compte, à tremper le support en acier après l'avoir équipé d'un outil de coupe sous forme d'une plaquette en carbure. En fait, en procédant au traitement thermique, ayant pour fonction de durcir ledit support, ceci après l'opération de brasage, on obtient, en définitive, un élément n'ayant aucune faiblesse, ne serait-ce localement, du fait de cette opération de brasage.

Pour aboutir à ce résultat il a fallu, à l'Homme du Métier de surmonter le préjugé selon lequel l'on ne peut effectuer un traitement thermique brutal, tel qu'une trempe sur un ensemble composite, à savoir composé d'éléments constitués en des matériaux qui, physiquement, réagissent de manière totalement distincte. Ainsi, l'acier présente un coefficient de dilatation très différent par rapport à une plaquette en carbure obtenue par frittage. Celle-ci étant d'une très grande dureté elle ne réagit que faiblement à la température et s'avère particulièrement fragile au changement brusque de cette dernière.

En définitive, le procédé selon l'invention est caractérisé en ce que :
- l'on élève, tout d'abord, l'ensemble, support en acier et outil de coupe, à une température correspondant, sensiblement, à la température d'austénitisation de la nuance de l'acier du support, tandis qu'entre ce dernier et ledit outil de coupe est interposé un métal d'apport dont la température de fusion se situe dans une plage comprise entre ladite température d'austénitisation et une température au plus inférieure de 30%;
- puis, après une période de refroidissement permettant au métal d'apport de passer de l'état liquide à l'état au moins plastique, l'on procède à la trempe de l'ensemble sous fluide gazeux et/ou liquide. Avantageusement, l'opération de trempe est menée dans des conditions déterminées pour l'obtention d'un matériau homogène ceci en fonction du diagramme de phase correspondant à la nuance d'acier du support.

Les avantages découlant de la présente invention sont évidents, puisque l'on dispose, en finalité, d'un dispositif de travail particulièrement résistant que ce soit tant au niveau de son bord d'attaque que de la structure elle-même. En effet, comparativement à un brasage classique, au cours duquel l'on va faire appel à un métal d'apport dont la température de fusion est aussi basse que possible pour éviter une élévation excessive en température et, donc, le phénomène de revenu, il est retenu, ici, un métal d'apport qui, en fin de compte, est déterminé en fonction des conditions de trempe du support en acier. Par ailleurs, c'est au travers de ce métal d'apport que l'on maîtrise les problèmes liés au différentiel de dilatation existant entre ledit support en acier et l'outil de coupe, notamment sous forme d'une plaquette en carbure.

L'invention est exposée ci-après plus en détail à l'aide de dessins représentant seulement un mode d'exécution.
La figure 1 est une représentation schématisée d'un soc de charrue ;
La figure 2 est une vue schématisée et partielle de la dent de ce soc de charrue recevant, au niveau de son bord d'attaque, un outil de coupe sous forme d'une plaquette en carbure ;
La figure 3 représente, schématiquement, un diagramme de phase correspondant à la nuance de l'acier du support, sur ce diagramme de phase étant reportée la courbe de trempe y compris les différentes étapes du procédé de brasage.

La présente invention concerne un procédé de brasage par induction pour rapporter sur un support en acier 1 un outil de coupe 2 caractérisé par sa tenue mécanique à l'abrasion. Ainsi, cet outil de coupe 2 se présentera, très fréquemment, sous forme d'une plaquette en carbure fritté et/ou cémentée, sachant, toutefois, que la présente invention n'est nullement limitée à un tel matériau.

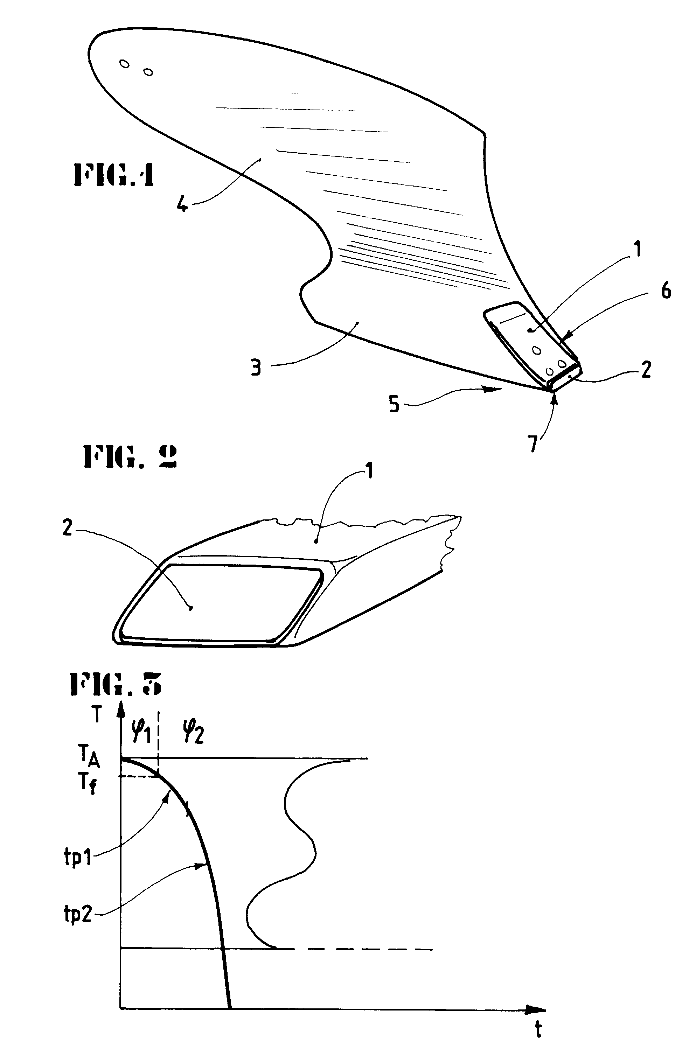

Quant au support en acier 1 qu'il convient, précisément, d'équiper d'un tel outil de coupe 2, il peut s'agir de tout dispositif destiné à travailler dans un milieu abrasif, tel qu'un dispositif de travail de la terre de la pierre ou analogue. Ainsi, il a tout particulièrement été représenté, dans la figure 1, un soc de charrue 3 surmonté d'un versoir 4 et équipé, dans sa partie avant 5, d'une dent 6 dont le bord d'attaque 7 est pourvu, précisément, d'un outil de coupe 2. Dans ce cas de figure, cette dent 6 constitue le support en acier 1 sur lequel il convient de rapporter, par brasage, l'outil de coupe 2, notamment sous forme d'une plaquette en carbure.

L'on comprend bien que le procédé selon l'invention pourra être mis en oeuvre pour la conception d'autres types de dispositifs de travail dès l'instant que ceux-ci interviennent dans un milieu abrasif. Ainsi, un tel support en acier peut correspondre à une dent de herse rotative ou encore de haveuse, voire d'un tambour d'un broyeur de matériau notamment de pierre. De la même manière, l'on peut imaginer équiper les lames d'un gyrobroyeur d'outils de coupe au moyen du procédé conforme à l'invention.

Quoi qu'il en soit, il est à retenir qu'un tel support en acier 1 étant destiné, précisément, à travailler dans un milieu abrasif, il doit, lui-même, répondre à des conditions de dureté, bien que non soumis aux mêmes contraintes que son bord d'attaque 7. Ainsi, il est usuel de concevoir ce support en acier trempé, sachant que l'acier rapide s'avère d'un coût de revient trop élevé. Le problème que se propose de résoudre, précisément, la présente invention consiste en ce que le brasage, selon les techniques actuelles, d'un élément sur un support métallique trempé conduit fréquemment, à un revenu local de ce support. Ceci se traduit par une usure prématurée dudit support dans sa partie se situant à proximité immédiate de la brasure.

En fin de compte, le procédé selon l'invention permet de remédier à cela. Ainsi, il consiste, tout d'abord, à amener tant le support métallique 1 que l'outil de coupe 2, en température correspondant sensiblement à la température d'austénitisation TA de l'acier composant ledit support 1, ceci plus particulièrement par induction.

Par ailleurs, selon l'invention, le métal d'apport, intervenant dans l'opération de brasage et interposé entre la plaquette en carbure constituant l'outil de coupe 2 et le support en acier 1 est choisi de telle sorte que sa température de fusion Tf se situe dans une plage comprise entre cette température d'austénitisation TA de l'acier du support et une température au plus inférieure de 30 %. En fait, il y a lieu d'éviter que ce métal d'apport ou certains de ses composants s'évaporent ou brûlent à une température inférieure ou égale à la température d'austénitisation TA. Aussi, l'expérience a démontré que de bons résultats sont obtenus en choisissant un métal d'apport dont la température de fusion Tf est très proche de la température d'austénitisation TA correspondant à l'acier du support métallique, soit de l'ordre de 10 voire 15 % inférieure à cette température.

En conséquence, une fois l'ensemble, support 1 et outil de coupe 2 amené à cette température d'austénitisation le métal d'apport, en fusion, s'écoule entre les deux éléments. Il est alors possible d'entamer le cycle de refroidissement se décomposant en une première phase ϕ1 au cours de laquelle ledit métal d'apport, à l'état liquide se fige d'où résulte l'immobilisation de l'outil de coupe 2 par rapport au support 1. Dès cet instant peut intervenir la seconde phase ϕ2 correspondant à une opération de trempe qui peut être réalisée en une ou plusieurs étapes tp1, tp2. Quoi qu'il en soit et tel que visible sur le diagramme de phase correspondant à la figure 3 cette opération de trempe est menée, préférentiellement, de telle sorte que le matériau composant ledit support en acier 1 présente une structure homogène. Plus particulièrement, au cours de cette opération de trempe il sera recherché un traitement martensitique ou bainitique.

Dans ce contexte, on peut procéder à une trempe tp1 sous fluide gazeux, notamment à l'air, suivi par une trempe tp2 sous fluide liquide, notamment à l'huile ou autre composé.

Tel que déjà indiqué plus haut, les conditions de cette opération de trempe sont déterminées par les caractéristiques de l'alliage correspondant au support en acier et la composition recherchée au travers de cette opération de trempe, à savoir l'obtention d'un acier trempé martensitique ou bainitique. A ce propos, l'on pourra retenir, tout particulièrement, en tant qu'acier composant le support 1 celui permettant d'obtenir une structure martensitique ou bainitique malgré une vitesse de trempe relativement lente. De cette manière l'on évite des chocs thermiques trop importants au niveau de l'outil de coupe 2 dont le coefficient de dilatation est, comparativement au support 1, très faible. C'est précisément le métal d'apport qui, de par sa souplesse relative lors de la trempe, vient absorber, dans une certaine mesure, les variations dimensionnelles des pièces.

On notera, à ce propos, que pour pouvoir jouer le rôle qui lui est attribué, le métal d'apport doit présenter une épaisseur suffisante et préférentiellement constante entre le support en acier 1 et l'outil de coupe 2. Aussi, selon l'invention, on dispose entre ces derniers, avant brasure, un filet en un matériau, par exemple en nickel, dont la température de fusion est supérieure à la température d'austénitisation TA de l'acier du support. L'épaisseur de ce filet est ainsi définie pour préserver, après fusion du métal d'apport, un espace déterminé entre le support en acier 1 et l'outil de coupe 2, espace dans lequel peut alors diffuser ledit métal d'apport. L'on observera qu'un tel filet a, en outre, l'avantage de réduire les tensions au niveau de ce métal d'apport résultant du refroidissement des pièces présentant des coefficients de dilatation très distincts.

En vue de faciliter l'opération de brasage, il peut être opportun d'assurer un parfait maintien de l'outil de coupe 2 et du métal d'apport sur le support en acier 1. A ce propos, celui-ci peut être pourvu de moyens de maintien et de positionnement, par exemple, sous forme de languettes, qui permettent précisément de maintenir parfaitement immobile l'outil de coupe 2 et donc le métal d'apport pendant toute la phase de chauffage des pièces et au moins jusqu'à solidification dudit métal d'apport après brasure. L'on remarquera que si de telles languettes s'étendent, en partie, au-dessus de l'outil de coupe 2, elles peuvent être supprimées immédiatement en fin d'opération par meulage par exemple. Toutefois, de telles languettes viendront à disparaître automatiquement au cours d'utilisation du dispositif de travail de la terre, de la pierre ou autre matière abrasive similaire.

Finalement, l'on s'aperçoit que c'est en allant à l'encontre d'un préjugé dans le domaine que la présente invention a su répondre, judicieusement, au problème posé. Ainsi, en procédant à la trempe du support en acier 1 une fois pourvue de l'outil de coupe 2 dans des conditions de brasage particulières, l'on évite toute faiblesse locale de ce support en acier 1, gage de sa longévité sous les agressions de matériaux abrasifs, tels que la terre, les pierres ou autres.

Il est à remarquer, également à ce propos, que s'il était indispensable jusqu'à présent, de surdimensionner l'outil de coupe 2 en vue de protéger, autant que possible, le support en acier 1, ceci n'est plus nécessaire grâce au procédé selon l'invention.

Finalement, le procédé conforme à l'invention s'avère d'un coût de revient similaire aux solutions de brasage connues, ceci pour un résultat bien plus performant.

Aussi la présente invention doit elle être considérée comme un net progrès dans le domaine technologique considéré.

## Revendications

1. Procédé de brasage par induction d'un outil de coupe (2), tel qu'une plaquette en carbure ou analogue, sur un support en acier (1) d'un dispositif (3) de travail de la terre, de la pierre ou autre matière abrasive, tel un soc de charrue, une dent de herse rotative, de haveuse ou d'un tambour de broyeur, caractérisé par le fait que :
- l'on élève l'ensemble, support en acier (1) et outil de coupe (2) , à une température correspondant sensiblement à la température d'austénitisation (TA) de la nuance de l'acier du support (1) tandis qu'entre ce dernier et l'outil de coupe (2) est interposé un métal d'apport dont la température de fusion (Tf) se situe dans une plage comprise entre ladite température d'austénitisation (TA) et une température au plus inférieure de 30 % ;
- puis, après une période de refroidissement permettant au métal d'apport de passer de l'état liquide au moins à l'état plastique, l'on procède à la trempe de l'ensemble sous fluide gazeux et/ou liquide.

2. Procédé selon la revendication 1, caractérisé en ce que le métal d'apport est choisi de sorte que sa température de fusion (Tf) se situe entre la température d'austénitisation (TA) de l'acier du support (1) et une température au plus inférieure de 15 % de cette température d'austénitisation (TA).

3. Procédé selon la revendication 1, caractérisé par le fait que l'opération de trempe est menée dans des conditions déterminées pour l'obtention d'un matériau homogène ceci en fonction du diagramme de phase correspondant à la nuance d'acier du support (1).

4. Procédé selon l'une quelconque des revendications précédentes, caractérisé par le fait que l'opération de trempe est menée pour l'obtention d'un support (1) en acier trempé martensitique ou bainitique.

5. Procédé selon l'une quelconque des revendications précédentes, caractérisé par le fait que l'opération de trempe est menée en deux étapes (tp1), (tp2), dont la première est une trempe sous fluide gazeux, notamment à l'air, tandis que la seconde est une trempe sous fluide liquide.

6. Procédé selon l'une quelconque des revendications précédentes, caractérisé par le fait qu'avant brasage on dispose entre le support en acier (1) et l'outil de coupe (2) un filet en un matériau, par exemple en nickel, dont la température de fusion est supérieure à la température d'austénitisation TA de l'acier du support (1) et dont l'épaisseur est définie pour préserver, après fusion du métal d'apport, un espace déterminé entre le support en acier (1) et l'outil de coupe (2), espace dans lequel peut alors diffuser ledit métal d'apport.

7. Procédé selon l'une quelconque des revendications précédentes, caractérisé par le fait qu'avant brasage on assure le maintien de l'outil de coupe (2) sur le support en acier (1) au travers de moyens de maintien et de positionnement, tels que des languettes, équipant ledit support en acier (1).
